# EUROPEAN PATENT APPLICATION

(11) **EP 4 287 702 A1**
(43) Date of publication of application: **06.12.2023**
(21) Application number: 22745258.8
(22) Date of filing: 26.01.2022
(51) Int. Cl.: H04W 28/26, H04W 28/02

(54) **RESOURCE PROCESSING METHOD AND APPARATUS, AND TERMINAL AND STORAGE MEDIUM**

(30) Priority: 26.01.2021 CN 202110106340
(71) Applicant: Vivo Mobile Communication Co., Ltd., Dongguan, Guangdong 523863 (CN)
(72) Inventor: WANG, Huan, Dongguan, Guangdong 523863 (CN); JI, Zichao, Dongguan, Guangdong 523863 (CN)
(74) Representative: Lavoix
(86) International application number: PCT/CN2022/073940
(87) International publication number: WO 2022/161384

(57) **Abstract**

This application provides a resource processing method and apparatus, a terminal, and a storage medium. The method includes: performing, by a first terminal, a target operation, where the target operation includes at least one of the following: performing detection for a conflict resource; performing a conflict handling operation for the conflict resource; and performing SL resource selection based on a resource of a second terminal, the second terminal being a peer end of the first terminal on a physical sidelink channel; where the conflict resource includes at least one of the following: a conflict between SL resources; and a conflict between an SL resource and a non-SL resource.

## Description

### CROSS-REFERENCE TO RELATED APPLICATIONS

This application claims priority to Chinese Patent Application No. 202110106340.2, filed in China on January 26, 2021, which is incorporated herein by reference in its entirety.

### TECHNICAL FIELD

This application relates to the field of communications technologies, in particular to a resource processing method and apparatus, a terminal, and a storage medium.

### BACKGROUND

Sidelink (sidelink, SL) resource allocation in some communication systems (for example, fifth-generation mobile communication (5th-Generation, 5G) system) includes network device scheduling mode and terminal autonomous resource selection mode. In the network device scheduling mode, a network device notifies a terminal of a transmission resource through downlink signaling, and in the terminal autonomous resource selection mode, the terminal selects an available transmission resource from a resource pool. However, at present, the terminal directly selects an SL resource, for example, randomly selecting a resource from the resource pool, which leads to relatively poor SL processing capability of the terminal.

### SUMMARY

Embodiments of this application provide a resource processing method and apparatus, a terminal, and a storage medium, so as to resolve the problem that an SL processing capability of terminals is relatively poor.

According to a first aspect, an embodiment of this application provides a resource processing method, including:
performing, by a first terminal, a target operation, where the target operation includes at least one of the following:
   performing detection for a conflict resource;
   performing a conflict handling operation for the conflict resource; and
   performing SL resource selection based on a resource of a second terminal, the second terminal being a peer end of the first terminal on a physical sidelink channel; where
the conflict resource includes at least one of the following:
   a conflict between SL resources; and
   a conflict between an SL resource and a non-SL resource.

According to a second aspect, an embodiment of this application provides a resource processing apparatus, including:
an execution module, configured to perform a target operation, where the target operation includes at least one of the following:
performing detection for a conflict resource;
performing a conflict handling operation for the conflict resource; and
performing sidelink SL resource selection based on a resource of a second terminal, the second terminal being a peer end of the first terminal on a physical sidelink channel, and the first terminal including the resource processing apparatus.

The conflict resource includes at least one of the following:
a conflict between sidelink SL resources; and
a conflict between an SL resource and a non-SL resource.

According to a third aspect, an embodiment of this application provides a terminal, where the terminal includes a memory, a processor, and a program or instructions stored in the memory and capable of running on the processor, where when the program or the instructions are executed by the processor, the steps of the resource processing method provided in the embodiments of this application are implemented.

According to a fourth aspect, an embodiment of this application provides a readable storage medium, where a program or instructions are stored in the readable storage medium, and when the program or the instructions are executed by a processor, the steps of the resource processing method provided in the embodiments of this application are implemented.

According to a fifth aspect, an embodiment of this application provides a computer program product, where the computer program product is stored in a non-transitory storage medium, and the computer program product is executed by at least one processor to implement the steps of the resource processing method in the embodiments of this application.

According to a sixth aspect, an embodiment of this application provides a communication device configured to execute the steps of the resource processing method provided in the embodiments of this application.

In the embodiments of this application, the first terminal performs the target operation, where the target operation includes at least one of the following: performing detection for a conflict resource; performing a conflict handling operation for the conflict resource; and performing SL resource selection based on the resource of the second terminal, the second terminal being a peer end of the first terminal on the physical sidelink channel; where the conflict resource includes at least one of the following: a conflict between SL resources; and a conflict between an SL resource and a non-SL resource. With the target operation, an SL processing capability of the terminal can be improved.

### BRIEF DESCRIPTION OF DRAWINGS

FIG. 1 is a structural diagram of a wireless communications system to which the embodiments of this application are applicable;
FIG. 2 is a flowchart of a resource processing method according to an embodiment of this application;
FIG. 3 to FIG. 7 are schematic diagrams of scenarios according to an embodiment of this application;
FIG. 8 is a structural diagram of a resource processing apparatus according to an embodiment of this application; and
FIG. 9 is a structural diagram of a terminal according to an embodiment of this application.

### DETAILED DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the data used in this way is interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, in the specification and claims, "and/or" represents presence of at least one of connected objects, and the symbol "/" in this specification usually indicates an "or" relationship between associated objects.

It should be noted that technologies described in the embodiments of this application are not limited to a long term evolution (Long Term Evolution, LTE)/LTE-advanced (LTE-Advanced, LTE-A) system, and may also be used in various wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. However, in the following descriptions, a new radio (New Radio, NR) system is described for an illustration purpose, and NR terms are used in most of the following descriptions, although these technologies may also be applied to other applications than an NR system application, for example, the sixth generation (6th Generation, 6G) communications system.

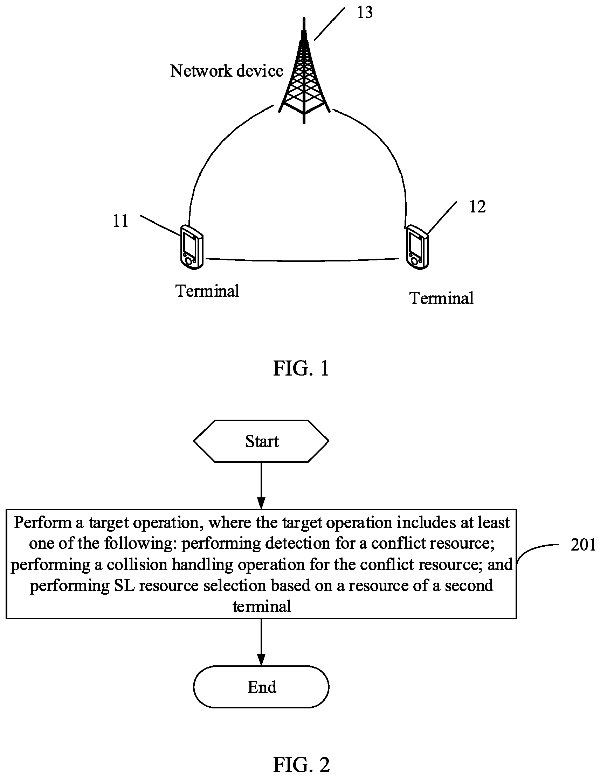

Referring to FIG. 1, FIG. 1 is a structural diagram of a communication system to which the embodiments of the present invention are applicable. As shown in FIG. 1, a terminal 11, a terminal 12, and a network-side device 13 are included. The terminal 11 may communicate with the terminal 12 through a side link (Sidelink or called a side-link or a side link, SL for short), the network-side device 13 may communicate with at least one of the terminal 11 and the terminal 12 over an air interface (Uu) through uplink and downlink (uplink and downlink).

The terminal 11 may be a terminal-side device, such as a mobile phone, a tablet computer (Tablet Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID) or vehicle user equipment (VUE), pedestrian user equipment (PUE), or a reduced capability user equipment (Reduced Capability User Equipment, RedCap UE). The Redcap UE may include: a wearable device, an industrial sensor, a video monitoring device, and so on. The wearable device includes: a wrist band, earphones, glasses, or the like. It should be noted that a specific type of the terminal 11 is not limited in the embodiments of this application.

The network-side device 13 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a wireless local area network (Wireless Local Area Networks, WLAN) access point, a wireless fidelity (Wireless Fidelity, WiFi) node, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

The following describes in detail a resource processing method and apparatus, a terminal, and a storage medium provided in the embodiments of this application by using specific embodiments and application scenarios thereof with reference to the accompanying drawings.

Referring to FIG. 2, FIG. 2 is a flowchart of a resource processing method according to an embodiment of this application. As shown in FIG. 2, the method includes the following step.

Step 201: Perform a target operation, where the target operation includes at least one of the following:
performing detection for a conflict resource;
performing a conflict handling operation for the conflict resource; and
performing SL resource selection based on a resource of a second terminal, the second terminal being a peer end of the first terminal on a physical sidelink channel.

The first terminal may be a transmit end of the SL, or may be a receive end of the SL. The second terminal may be a transmit end or receive end of the SL (the transmit end or receive end is collectively referred to as a peer end), and the first terminal may correspond to multiple second terminals, for example, one second terminal is a transmit end of the SL, and another second terminal is a receive end of the SL. The physical sidelink channel may be a physical sidelink control channel (physical sidelink control channel, PSCCH), a physical sidelink shared channel (physical sidelink shared channel, PSSCH), or a physical sidelink feedback channel (Physical Sidelink Feedback channel, PSFCH).

The performing detection for a conflict resource may be detecting whether a conflict resource is present in resources related to the first terminal. For example, it is detected whether a conflict resource is included in at least one of a resource used for SL transmission of the first terminal, a resource used for SL reception of the first terminal, an uplink (uplink, UL) resource, and the like.

In this embodiment of the application, the conflict resource includes at least one of the following:
a conflict between SL resources; and
a conflict between an SL resource and a non-SL resource.

The SL resource is a resource used for SL transmission, for example: a PSCCH resource, a PSSCH resource, and a PSFCH resource.

The conflict between SL resources may be multiple SL resources being overlapping partially or completely.

The non-SL resource may be a resource used by the first terminal for communicating with a network device, for example, an uplink transmit resource (UL TX resource) or a downlink receive resource (DL RX resource). Alternatively, the non-SL resource may be a Wi-Fi resource, a Bluetooth resource, a Zigbee (Zigbee, which is a wireless network protocol for low-speed and short-distance transmission) resource, or the like.

The conflict between the SL resource and the non-SL resource may be that the SL resource and the non-SL resource partially or completely overlap.

It should be noted that, in this embodiment of this application, the resource conflict may refer to resource overlapping or potential resource overlapping of at least two resources. The potential resource overlapping means that at least two resources are detected to have resource overlapping at a specific moment, but have no resource overlapping detected at other moments. For example, some terminals have performed resource reselection; therefore, resource overlapping exists before reselection, and resource overlapping may no longer exist after reselection. In addition, resource overlapping or potential resource overlapping may refer to partial or complete overlapping of resources in time, for example, having a same slot/sub-slot/symbol/subframe. Resource overlapping may alternatively be overlapping of frequency-domain resources or overlapping of time-frequency resources.

In addition, in this embodiment of this application, the conflict resource may alternatively be referred to as a collision resource.

The performing a conflict handling operation for the conflict resource may be performing the conflict handling operation for the conflict resource in a case that the conflict resource is detected or signaling for notifying the conflict resource is received, for example, dropping the conflict resource, dropping transmission corresponding to the conflict resource, or performing resource reselection.

It should be noted that, in this embodiment of this application, the conflict resource may be determined through detection, or may be notified using signaling of the second terminal. Further, after detecting the conflict resource, the first terminal may alternatively notify the second terminal of the conflict resource.

The performing SL resource selection based on the resource of the second terminal may be selecting an SL resource not overlapping with the resource of the second terminal, or selecting an SL resource not overlapping with a feedback resource corresponding to the resource of the second terminal.

In this embodiment of this application, through the foregoing steps, at least one of performing detection for the conflict resource, performing the conflict handling operation for the conflict resource, and performing SL resource selection based on the resource of the second terminal may be implemented, so as to improve the SL capability of the terminal. For example, the conflict resource related to the first terminal may be determined through detection for the conflict resource, thereby improving resource detection effects of the first terminal. Because SL resource selection is performed based on the resource of the second terminal, resource conflict can be reduced or avoided, so as to improve SL transmission reliability. Because the conflict handling operation is performed on the conflict resource, SL transmission reliability can be improved and transmission conflict can be reduced or avoided to improve resource utilization.

In an optional implementation, the performing detection for a conflict resource includes: performing, by the first terminal, detection for the conflict resource based on resource information; where
the resource information is used to represent at least one of the following:
a resource of the first terminal and a resource of at least one second terminal.

The resource of the first terminal may be a resource selected by the first terminal or a resource reserved by the first terminal, or a resource that the first terminal needs to occupy, for example, a resource selected by the first terminal for SL transmission. The resource of the second terminal may be a resource selected by the second terminal or a resource reserved by the second terminal, or a resource that the second terminal needs to occupy, for example, a resource selected by the second terminal for SL transmission.

The resource of the at least one second terminal may be a resource notified by the second terminal through signaling. For example, after selecting a resource, the second terminal notifies, using broadcast signaling or unicast signaling, the first terminal of the resource selected by the second terminal.

The performing, by the first terminal, detection for the conflict resource based on resource information may be: detecting whether a conflict resource is present in resources of the first terminal, or detecting whether a conflict resource is present between the resources of the first terminal and resources of the at least one second terminal.

In this implementation, whether a conflict resource is present can be accurately detected based on the resource information.

Optionally, the performing, by the first terminal, detection for the conflict resource based on resource information includes:
performing, by the first terminal, detection for the conflict resource based on the resource information and an identifier of the at least one second terminal.

The identifier of the at least one second terminal may be used to identify the second terminal corresponding to the resource, so that the second terminal having resource conflict with the first terminal can be accurately determined based on the resource information and the identifier of the at least one second terminal, thereby further improving detection effects.

Optionally, the resource of the at least one second terminal includes:
a resource that is of the at least one second terminal and that is determined based on SL control information received by the first terminal, where the SL control information includes at least one of the following:
resource reservation information and a terminal identifier associated with a reserved resource.

The resource reservation information may be PSCCH/PSSCH resource reservation information, and the terminal identifier associated with the reserved resource may be a destination identifier (destination ID) of the reserved resource or a source identifier (source ID) of the reserved resource. The reserved resource may include an aperiodic and/or periodic reserved resource.

In this implementation, the resource of the at least one second terminal may be accurately determined based on the SL control information.

In addition, the SL control information may be SL control information obtained by demodulating at least one of PSCCH and PSSCH.

For example: in a case that the second terminal is a transmit end sending PSCCH/PSSCH to the first terminal, the first terminal demodulates SL control information sent by the second terminal to obtain PSCCH/PSSCH resource reservation information and a destination identifier associated with the PSCCH/PSSCH resource, so as to determine whether to send PSCCH/PSSCH on the PSCCH/PSSCH resource to the first terminal. For example, the first terminal demodulates a first channel state information field (1^{st} stage SCI) in the SL control information (for example, PSCCH) to obtain the resource reservation information, and demodulates a second channel state information field (2^{nd} stage SCI) in PSSCH to obtain the destination identifier associated with the resource, so as to determine whether the resource is sent to the first terminal.

It should be noted that in this embodiment of this application, an aperiodic reserved resource may be associated with a corresponding terminal, that is, a target terminal for this resource transmission may be determined based on the aperiodic reserved resource. In this way, the SL control information does not need to carry the destination identifier. Certainly, in this embodiment of this application, in some scenarios, a periodic reserved resource may also be associated with a corresponding terminal, that is, a target terminal for this resource transmission may be determined based on the periodic reserved resource. In addition, in this embodiment of this application, it is possible to learn based on the destination identifier whether to send information on the aperiodic reserved or periodic reserved resource to the first terminal. Certainly, it can be also determined jointly in combination with a higher-layer destination identifier, which is not limited in this embodiment of this application.

For another example, in a case that the second terminal is a receive end for receiving PSCCH/PSSCH sent by the first terminal, the first terminal demodulates SL control information to obtain PSCCH/PSSCH resource reservation information and a source identifier associated with the resource, so as to determine whether PSCCH/PSSCH corresponding to the PSCCH/PSSCH resource comes from the second terminal. For example, a first channel state information field (1^{st} stage SCI) in the PSCCH is demodulated to obtain resource reservation information, where the reserved resource may include an aperiodic and/or periodic reserved resource, and it can be determined at least for the aperiodic reserved resource whether the reserved resource comes from the first terminal; and a second channel state information field (2^{nd} stage SCI) in the PSSCH may also be demodulated to obtain a source identifier associated with the reserved resource, so as to determine whether the reserved resource comes from the first terminal. For example, it may be learned at least based on the source identifier that the information on the aperiodic reserved resource is sent from the first terminal. Certainly, it can be also determined jointly in combination with a higher-layer source identifier, which is not limited in this embodiment of this application.

It should be noted that this embodiment of this application is not limited to determining the resource of the at least one second terminal based on the SL control information, for example, in some scenarios, the resource of the at least one second terminal may alternatively be learned from higher-layer signaling.

The following uses six scenarios as examples to describe detection for a conflict resource in this embodiment of this application:

### Scenario 1

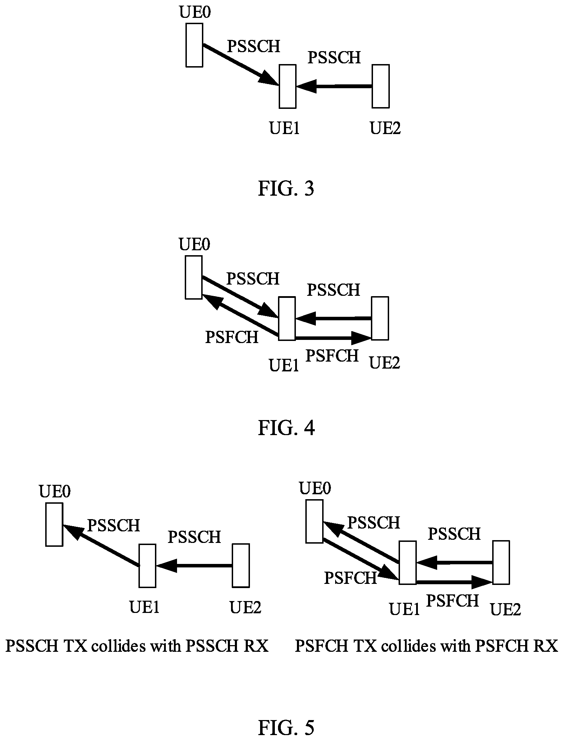

In this scenario, the first terminal is UE1, and UE0 and UE2 act as the second terminals. As shown in FIG. 3, in this scenario, the determining whether a transmission conflict occurs includes:
UE1 detects PSCCH/PSSCH resource overlapping/potential resource overlapping between multiple transmit ends (UE2, UE0) (for example, time-frequency resources of these PSCCH/PSSCH resources partially or completely overlap) and at least one transmit end sends information to UE1, it is then determined that there is a resource conflict.

### Scenario 2

In this scenario, the first terminal is UE1, and UE0 and UE2 act as the second terminals. As shown in FIG. 4, this scenario includes detection for a conflict between SL transmits, for example, including a conflict between PSFCH TX and PSFCH TX. Determining whether a conflict between SL transmits occurs includes:
UE1 detects PSCCH/PSSCH resource overlapping/potential resource overlapping between PSFCH resources corresponding to PSCCH/PSSCH resources of multiple transmit ends (UE2, UE0) (for example, time-frequency resources of these PSCCH/PSSCH resources partially or completely overlap) and at least two transmit ends send information to UE1. In this case, the PSFCH TX resource collides with the PSFCH TX resource.

### Scenario 3

As shown in FIG. 5, this scenario includes detection for conflict of SL transmit/receive in duplex mode, for example, including a conflict between PSSCH TX and PSSCH RX, and further including a conflict between PSFCH TX and PSFCH RX. Determining whether a conflict of SL transmit/receive in duplex mode occurs includes at least one of the following:
1. The first terminal is UE1, and UE0 and UE2 act as the second terminals.
   A conflict between PSSCH TX and PSSCH RX shown on the left side of FIG. 5 may include the following:
      UE1 detects resource overlapping/potential resource overlapping between its PSCCH/PSSCH resource and a PSCCH/PSSCH resource used by its transmit end (UE2) for sending information to UE1 (for example, these PSCCH/PSSCH resources overlap in time/in a same slot/sub-slot/symbol/sub-frame). In this case, it is determined that there is a resource conflict between PSSCH TX and PSSCH RX.
   A conflict between PSFCH TX and PSFCH RX shown on the right side of FIG. 5 may include the following:
      UE1 detects that a PSFCH resource corresponding to its PSCCH/PSSCH resource overlaps (for example, overlapping in time /in a same PSFCH occasion) with a PSFCH resource corresponding to a PSCCH/PSSCH resource used by the transmit end (UE2) for sending information to UE1. In this case, it is determined that there is a resource conflict between PSFCH TX and PSFCH RX.
2. The first terminal is UE2, and UE1 acts as the second terminal.

The conflict between PSSCH TX and PSSCH RX shown on the left side of FIG. 5 may include the following:
UE2 detects resource overlapping/potential resource overlapping between its PSCCH/PSSCH resource and a PSCCH/PSSCH resource of a PSCCH/PSSCH receive end (UE1) of the PSCCH/PSSCH resource (for example, overlapping in time/in a same slot/sub-slot/symbol/sub-frame). In this case, it is determined that there is a resource conflict between PSSCH TX and PSSCH RX.

The conflict between PSFCH TX and PSFCH RX shown on the right side of FIG. 5 may include the following:
UE2 detects that a PSFCH resource corresponding to its PSCCH/PSSCH resource overlaps (for example, overlapping in time /in a same PSFCH occasion) with a PSFCH resource corresponding to a PSCCH/PSSCH resource used for sending information by a PSCCH/PSSCH receive end (UE1) of the PSCCH/PSSCH resource. In this case, there is a resource conflict between PSFCH TX and PSFCH RX.

### Scenario 4

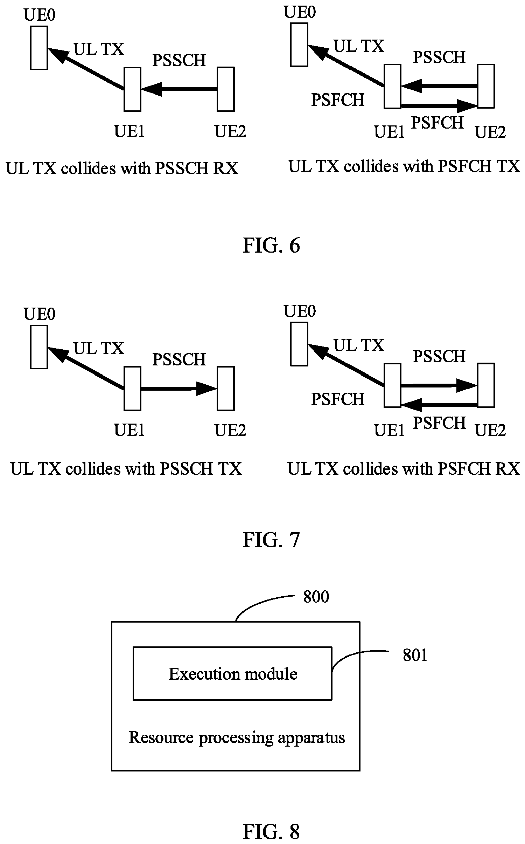

In this scenario, the first terminal is UE1, and UE0 and UE2 act as the second terminals. As shown in FIG. 6, this scenario includes detection for a duplex conflict between UL transmit/receive and SL transmit/receive or a conflict between UL transmit and SL transmit, for example, including a conflict between UL TX and PSSCH RX, and a conflict between UL TX and PSFCH TX. Determining whether a duplex conflict between UL transmit/receive and SL transmit/receive or a conflict between UL transmit and SL transmit occurs includes at least one of the following:
A conflict between UL TX and PSSCH RX shown on the left side of FIG. 6 may include the following:
UE1 detects resource overlapping/potential resource overlapping between its UL TX resource and a PSCCH/PSSCH resource used by its transmit end (UE2) for sending information to UE1 (for example, the resources overlap in time/in a same slot/sub-slot/symbol/sub-frame). In this case, there is a resource conflict between UL TX and PSSCH RX.

A conflict between UL TX and PSFCH TX shown on the right side of FIG. 6 may include the following:
UE1 detects resource overlapping/potential resource overlapping between its UL TX resource and a PSFCH resource corresponding to a PSCCH/PSSCH resource used by its transmit end (UE2) for sending information to UE1 (for example, the resources overlap in time/in a same slot/sub-slot/symbol/sub-frame). In this case, there is a resource conflict between UL TX and PSFCH TX.

### Scenario 5

In this scenario, the first terminal is UE1, and UE0 and UE2 act as the second terminals. As shown in FIG. 7, this scenario includes detection for a duplex conflict between UL transmit/receive and SL transmit/receive or a conflict between UL transmit and SL transmit, for example, including a conflict between UL TX and PSSCH TX, and a conflict between UL TX and PSFCH RX. Determining whether a duplex conflict between UL transmit/receive and SL transmit/receive or a conflict between UL transmit and SL transmit occurs includes at least one of the following:
For a conflict between UL TX and PSSCH TX shown on the left side of FIG. 7, UE1 detects that there is resource overlapping/potential resource overlapping between an UL TX resource and a PSCCH/PSSCH resource used by UE1 for sending information. In this case, it is determined that there is a conflict between UL TX and PSSCH TX.

A conflict between UL TX and PSFCH RX shown on the right side of FIG. 7 may include the following:
UE1 detects resource overlapping/potential resource overlapping between its UL TX resource and a PSFCH resource corresponding to a PSCCH/PSSCH resource used by UE1 for sending information (for example, the resources overlap in time/in a same slot/sub-slot/symbol/sub-frame). In this case, it is determined that there is a resource conflict between UL TX and PSFCH RX.

### Scenario 6

In this scenario, the first terminal is UE1, and UE0 and UE2 act as the second terminals. Determining whether a transmission conflict occurs includes:
UE1 detects PSCCH/PSSCH resource overlapping/potential resource overlapping between multiple transmit ends (UE2, UE0) (for example, time-frequency resources of these PSCCH/PSSCH resources partially or completely overlap), and at least one transmit end sends information to another transmit end in the multiple transmit ends. In this case, it is determined that there is a resource conflict.

It should be noted that in the foregoing six scenarios, UL TX may be replaced by LTE SL TX/RX or transmission of any other technologies (such as Wi-Fi, Bluetooth, or Zigbee). In addition, the foregoing six scenarios are only examples of the conflict resources provided in the embodiments of this application, and the conflict resources in the embodiments of this application are not limited to the conflict resources in the foregoing six scenarios.

In an optional implementation, the performing a conflict handling operation for the conflict resource includes:
in a case that the conflict resource is detected and there is a transmission conflict, performing the conflict handling operation for the conflict resource.

The transmission conflict may refer to confirming authenticity of the conflict resources, because some resources may collide in practical applications and such resources may not have a transmission conflict. For example, some resources collide, and transport blocks (Transport Block, TB) corresponding to these resources, however, may have been successfully transmitted, for example, the first transmission in multiple transmissions is successful, or the terminal may not need to perform hybrid automatic repeat request (Hybrid Automatic Repeat request, HARQ) feedback on some resources.

Optionally, presence of the transmission conflict is determined in a case of at least one of the following:
the first terminal needs to receive a TB on the conflict resource;
the first terminal needs to send a TB on the conflict resource;
the first terminal needs to receive a HARQ feedback on the conflict resource;
the first terminal needs to send a HARQ feedback on the conflict resource; where
the TB is a TB corresponding to the conflict resource, and the HARQ feedback is a HARQ feedback corresponding to the conflict resource.

The TB corresponding to the conflict resource may be: in a case that the conflict resource is a PSCCH/PSSCH resource, the TB is a TB that needs to be transmitted on the PSCCH/PSSCH resource, or in a case that the conflict resource is a PSFCH resource, the TB is a TB transmitted on the PSCCH/PSSCH causing the PSFCH resource conflict.

The HARQ feedback corresponding to the conflict resource may be a HARQ feedback that needs to be performed on the conflict resource.

The receiving a TB is receiving a TB sent by the second terminal, the sending a TB is sending a TB to the second terminal, the receiving a HARQ feedback is receiving a HARQ feedback sent by the second terminal, and the sending a HARQ feedback is sending a HARQ feedback to the second terminal.

The first terminal needing to receive a TB on the conflict resource may be that the first terminal determines before the conflict resource that the TB cannot be successfully demodulated, and therefore, the first terminal needs to continue reception on the conflict resource. In this case, a conflict actually exists, that is, the transmission conflict exists. Alternatively, the first terminal needing to receive a TB on the conflict resource may be that the first terminal cannot determine before the conflict resource whether the TB has been successfully demodulated (for example, there is still a TB transmission resource to be used), and the first terminal may need to continue reception on the conflict resource. Whether to continue reception on the conflict resource specifically depends on protocol specifications/ configuration/pre-configuration/autonomous judgment of the first terminal. In other words, in a case that the first terminal cannot determine before the conflict resource whether the TB has been successfully demodulated, whether the transmission conflict exists depends on protocol specifications/ configuration/pre-configuration/autonomous judgment of the first terminal.

The first terminal needing to send a TB on the conflict resource may be that the first terminal cannot successfully send the TB before the conflict resource, and the first terminal needs to continue sending on the conflict resource, resulting in a transmission conflict, for example, a duplex conflict between PSSCH transmit (PSSCH TX) and PSSCH receive (PSSCH RX) or a duplex conflict between PSFCH transmit (PSFCH TXs) and PSFCH receive (PSFCH RX) actually exists.

Alternatively, the first terminal needing to send a TB on the conflict resource may be that the first terminal cannot determine before the conflict resource whether the TB is successfully sent (a TB transmission resource to be used is still present), and the first terminal determines according to the protocol specifications/ configuration/pre-configuration/autonomous judgment of the first terminal to continue sending on the conflict resource, resulting in a transmission conflict. In other words, in a case that the first terminal cannot determine before the conflict resource whether the TB is successfully sent, whether the transmission conflict exists depends on protocol specifications/ configuration/pre-configuration/autonomous judgment of the first terminal.

In addition, the first terminal may determine based on a HARQ feedback status whether the TB is successfully sent. For example, if an ACK is received for unicast or groupcast (unicast/groupcast), it is determined that the TB is sent successfully. For groupcast in some scenarios, if no NACK is received, it may be determined that the TB is sent successfully.

The first terminal needing to receive or send a HARQ feedback on the conflict resource may be that, for a duplex conflict of PSFCH transmit/receive, the first terminal determines whether HARQ feedback is enabled for TB transmission on the colliding PSSCH resource or whether HARQ-ACK/NACK needs to be fed back for the TB. If HARQ feedback is enabled or HARQ-ACK/NACK needs to be fed back for the TB, the terminal needs to receive a HARQ feedback if acting as a transmit end, and the terminal needs to send a HARQ feedback if acting as a receive end.

Optionally, absence of the transmission conflict is determined in a case of at least one of the following:
the first terminal has successfully demodulated the TB before the conflict resource;
the first terminal is able to successfully send the TB before the conflict resource;
the first terminal does not need to receive a HARQ feedback on the conflict resource; and
the first terminal does not need to send a HARQ feedback on the conflict resource; where
the TB is a TB corresponding to the conflict resource, and the HARQ feedback is a HARQ feedback corresponding to the conflict resource.

In this implementation, if the first terminal has successfully demodulated the TB before the conflict resource, it is determined that no actual conflict exists, that is, the transmission conflict does not exist. For example, when the first terminal performs TB reception, a TB transmission in multiple TB transmissions is performed on a colliding PSCCH/PSSCH resource or is performed on a PSCCH/PSSCH that causes a PSFCH conflict. If the UE has successfully demodulated the TB before the conflict resource, the first terminal does not need to continue reception on the conflict resource, and the conflict does not actually exist.

In this implementation, if the first terminal can successfully send the TB before the conflict resource, it is determined that no actual conflict exists, that is, the transmission conflict does not exist. For example, when the first terminal performs TB transmission, a TB transmission in multiple TB transmissions is performed on the conflict resource, or is performed on a PSCCH/PSSCH that causes a PSFCH conflict. If the first terminal can successfully send the TB before the conflict resource, the first terminal does not need to continue transmission on the conflict resource, and the conflict does not actually exist.

The first terminal not needing to receive or send a HARQ feedback on the conflict resource may be: for a duplex conflict of PSFCH transmit and receive, the first terminal determines whether HARQ feedback is enabled for TB transmission on the colliding PSSCH resource, or whether a HARQ-ACK/NACK needs to be fed back for the TB. If HARQ feedback is not enabled/HARQ-ACK/NACK feedback is not allowed, the conflict does not actually exist, that is, the transmission conflict does not exist.

In the foregoing implementations, the conflict handling operation may be performed only in a case that the transmission conflict exists, that is, the conflict actually exists. In a case that the conflict resource exists but the transmission conflict does not exist, that is, the conflict does not actually exist, the conflict handling operation may not be performed to save power consumption of the terminal.

In an optional implementation, the target operation further includes:
detecting whether a last transmission of a TB corresponding to the conflict resource before the conflict resource is successful.

The TB corresponding to the conflict resource may be: in a case that the conflict resource is a PSCCH/PSSCH resource, the TB is a TB that needs to be transmitted on the PSCCH/PSSCH resource, or in a case that the conflict resource is a PSFCH resource, the TB is a TB transmitted on a PSCCH/PSSCH resource causing a PSFCH resource conflict.

The foregoing last transmission may be: in a case of multiple transmissions of the TB, determining whether the last transmission of the TB is successful before the conflict resource. For example, if three TB transmissions are configured and the conflict resource is for the third transmission of the TB, it is then determined whether the second transmission of the TB is successful.

In this implementation, detecting whether the last transmission is successful is more conducive to detection for the conflict resource by the terminal, so as to further improve detection effects of the terminal. For example, when the last transmission is successful, it may be directly considered that the transmission conflict does not exist on the conflict resource.

In an optional implementation, the performing a conflict handling operation for the conflict resource includes:
performing a conflict handling operation for the conflict resource in a case that at least one of the following is satisfied:
a transmission type corresponding to the conflict resource is a target transmission type;
quality of service (Quality of Service, QoS) of transmission information corresponding to the conflict resource is target QoS;
no transmission resource for a TB corresponding to the conflict resource is present after the conflict resource; and
the first terminal is unable to send a plurality of physical sidelink feedback channels PSFCHs on the conflict resource, or a transmit power of at least one PSFCH of the first terminal on the conflict resource is lower than or equal to a threshold.

The target transmission type may be a specific transmission type specified by the protocol, pre-configured, or indicated by the network. For example, the target transmission type includes at least one of the following:
unicast (unicast), groupcast (groupcast), broadcast (broadcast), groupcast option 1 (groupcast option 1), and groupcast option 2 (groupcast option 2).

The groupcast option 1 (groupcast option 1) and groupcast option 2 (groupcast option 2) may be groupcast option 1 (groupcast option 1) and groupcast option 2 (groupcast option 2) defined in the protocol.

The transmission type corresponding to the conflict resource may be a transmission type on the colliding PSCCH/PSSCH resource, or a transmission type on the PSCCH/PSSCH resource causing the PSFCH conflict. The PSFCH conflict herein may be a conflict between PSFCH resources, or may be a conflict between a PSFCH resource and other resources (for example, PSSCH/PSCCH/UL resource).

The transmission information corresponding to the conflict resource may be transmission information on the colliding PSCCH/PSSCH resource or transmission information on the PSCCH/PSSCH resource causing the PSFCH conflict.

For example, the first terminal determines the transmission type on the colliding PSCCH/PSSCH resource (or on the PSCCH/PSSCH resource causing the PSFCH conflict), and performs the conflict handling operation only when it detects that the transmission type on the PSCCH/PSSCH resource for transmission of the first terminal/second terminal is a target transmission type.

The target QoS may be defined by the protocol, pre-configured, or indicated by the network. In addition, in this embodiment of this application, QoS may be a priority or other quality of service information. The following uses an example of QoS being a priority for description.

Before performing the conflict handling operation, the first terminal detects that a transmission priority of the second terminal on the colliding PSCCH/PSSCH resource (or the PSCCH/PSSCH resource causing the PSFCH conflict) is higher than/not lower than (or lower than/not higher than) a predefined/configured/pre-configured threshold; or
before performing the conflict handling operation, the first terminal detects that a transmission priority of the first terminal on the colliding PSCCH/PSSCH resource (or the PSCCH/PSSCH resource causing the PSFCH conflict) is higher than/not lower than (or lower than/not higher than) a predefined/configured/pre-configured threshold.

No transmission resource for a TB corresponding to the conflict resource being present after the conflict resource may be: detecting whether a transmission resource for the TB is still present after the colliding PSCCH/PSSCH resource (or after the PSCCH/PSSCH resource causing the PSFCH conflict). If no transmission resource is present, the conflict handling operation is performed.

Alternatively, no transmission resource for a TB corresponding to the conflict resource being present after the conflict resource may be: the first terminal detects that the second terminal uses multiple transmission resources for TB transmission; if detecting that a retransmission resource for the TB is still present after the conflict resource, the first terminal does not perform the conflict handling operation; or if detecting that no retransmission resource for the TB is present after the conflict resource, the first terminal performs the conflict handling operation.

Alternatively, no transmission resource for a TB corresponding to the conflict resource being present after the conflict resource may be: the first terminal uses multiple transmission resources for TB transmission; if a retransmission resource for the TB is still present after the conflict resource, the first terminal does not perform the conflict handling operation; or if no retransmission resource for the TB is present after the conflict resource, the first terminal performs the conflict handling operation.

The first terminal being unable to transmit multiple physical sidelink feedback channels PSFCHs on the conflict resource may be that, for a conflict between PSFCH transmits, the first terminal determines whether the multiple colliding PSFCHs can be transmitted at the same time, and if not, performs the conflict handling operation, or if yes, does not perform the conflict handling operation.

The transmit power of at least one PSFCH of the first terminal on the conflict resource being lower than or equal to the threshold may be: for a conflict between PSFCH transmits, if a power for transmitting a PSFCH by the first terminal is lower than (or not higher than) a threshold, the conflict handling operation is performed.

In the foregoing implementation, the conflict handling operation may be performed in a case that at least one of the foregoing is satisfied, so as to save power consumption of the terminal and improve transmission reliability of the terminal. The conflict handling operation is not performed in a case that at least one of the foregoing is not satisfied. Further, the foregoing implementation may alternatively be implemented in combination with the transmission conflict implementation. For example, in a case that the transmission conflict exists and at least one of the foregoing is satisfied, the conflict handling operation is performed for the conflict resource; otherwise, the conflict handling operation is not performed.

In an optional implementation, the performing a conflict handling operation for the conflict resource includes:
in a case that the conflict resource is being indicated as an SL resource of the first terminal for the first time, performing the conflict handling operation for the conflict resource under a first condition; or
in a case that the conflict resource is not being indicated as an SL resource of the first terminal for the first time, performing the conflict handling operation for the conflict resource under a second condition.

The first condition includes at least one of the following:
a transmission type corresponding to the conflict resource is a target transmission type;
quality of service QoS of transmission information corresponding to the conflict resource is target QoS;
no transmission resource for a TB corresponding to the conflict resource is present after the conflict resource; and
the first terminal is unable to send a plurality of PSFCHs on the conflict resource, or a transmit power of at least one PSFCH of the first terminal on the conflict resource is lower than or equal to a threshold.

The second condition includes at least one of the following:
a transmission type corresponding to the conflict resource is a target transmission type;
quality of service QoS of transmission information corresponding to the conflict resource is target QoS;
no transmission resource for a TB corresponding to the conflict resource is present after the conflict resource; and
the first terminal is unable to send a plurality of PSFCHs on the conflict resource, or a transmit power of at least one PSFCH of the first terminal on the conflict resource is lower than or equal to a threshold.

Content contained in the first condition is different from that in the second condition.

The conflict resource being indicated as an SL resource of the first terminal for the first time may be at least one of the following:
before detection for the conflict resource or the conflict handling operation is performed, the conflict resource has not been indicated by aperiodic reservation signaling, nor has been indicated by periodic reservation signaling;
the conflict resource is an aperiodic resource or a resource of the first period in the periodic resource;
before detection for the conflict resource or the conflict handling operation is performed, the conflict resource has not been indicated by aperiodic reservation signaling but has been indicated by periodic reservation signaling; and
before detection for the conflict resource or the conflict handling operation is performed, the conflict resource has not been indicated by aperiodic reservation signaling but has been indicated by periodic reservation signaling of a previous period.

For the first condition and second condition, refer to related description of the foregoing implementations. In this implementation, the content contained in the first condition is different from that in the second condition, and therefore different handling operations can be performed based on whether the conflict resource is indicated for the first time, so as to further improve the conflict handling capability of the terminal. For example, QoS judgment may not be performed in the case of being indicated for the first time, and QoS judgment needs to be performed in the case of not being indicated for the first time.

In an optional implementation, the performing a conflict handling operation for the conflict resource includes:
performing the conflict handling operation for the conflict resource based on a detection result at a target time point, where the detection result at the target time point is used to indicate at least one of the following:
the conflict resource;
whether there is a transmission conflict;
a transmission type of the conflict resource;
a priority of transmission information of the conflict resource;
after the conflict resource, whether there is a transmission resource for a TB corresponding to the conflict resource; and
whether the first terminal is able to send a plurality of PSFCHs on the conflict resource, or whether a transmit power of at least one PSFCH of the first terminal on the conflict resource is lower than or equal to a threshold.

The target time point may be one or more time points defined by the protocol, pre-configured, or indicated by the network.

The detection result at the target time point being used to indicate at least one of the foregoing can be understood as that at least one of the following may be performed at the target time point:
performing detection for a conflict resource;
detecting whether there is a transmission conflict;
detecting a transmission type of the conflict resource;
detecting a priority of transmission information of the conflict resource;
detecting whether a transmission resource for a TB corresponding to the conflict resource is present after the conflict resource; and
detecting whether the first terminal is able to send a plurality of PSFCHs on the conflict resource, or whether a transmit power of at least one PSFCH of the first terminal on the conflict resource is lower than or equal to a threshold.

Optionally, the target time point includes at least one of the following:
a time point T1 before resource indication being performed on an SL resource of the first terminal;
a time point prior to the time point T1 before resource indication being performed on the SL resource of the first terminal;
a time point T1 before reservation of the SL resource of the first terminal;
a time point prior to the time point T1 before reservation of the SL resource of the first terminal;
a time point T2 before the SL resource of the first terminal;
a time point prior to the time point T2 before the SL resource of the first terminal;
a time point T3 before an SL resource of the second terminal;
a time point prior to the time point T3 before the SL resource of the second terminal;
a time point T3 after sending of reservation indication signaling for the SL resource of the second terminal;
a time point being after sending of the reservation indication signaling for the SL resource of the second terminal and being within the time point T3 after sending of the reservation indication signaling for the SL resource of the second terminal;
a time point T4 before sending of conflict indication signaling associated with the SL resource of the second terminal; and
a time point prior to the time point T4 before sending of the conflict indication signaling associated with the SL resource of the second terminal; where
the SL resource of the second terminal is a resource used by the second terminal for SL transmission to the first terminal, and the T1, T2, T3 and T4 represent same or different time resources.

It should be noted that the foregoing T1, T2, T3, and T4 may be time resources defined by the protocol, pre-configured, or indicated by the network. For example, T1, T2, T3, and T4 represent the same or different numbers of slots/sub-slots/ symbols/subframes or the like. In addition, the T1, T2, T3 and T4 may include a processing time of the terminal, for example, T1, T2, T3 and T4 may be time domain resources greater than the processing time of the terminal.

Optionally, the performing resource indication on the SL resource of the first terminal includes:
performing the i-th resource indication on the SL resource of the first terminal, where i is an integer greater than or equal to 1.

The foregoing i being equal to 1 indicates that the SL resource of the first terminal is indicated for the first time. For example,
before the detection is performed, the SL resource of the first terminal has not been indicated by aperiodic reservation signaling, nor has been indicated by periodic reservation signaling; or
the SL resource of the first terminal is an aperiodic resource, or a resource in the first period of the periodic resource; or
before the detection is performed, the SL resource of the first terminal has not been indicated by aperiodic reservation signaling but has been indicated by periodic reservation signaling; or
before the detection is performed, the SL resource of the first terminal has not been indicated by aperiodic reservation signaling but has been indicated by periodic reservation signaling of a previous period.

The SL resource of the first terminal may include a PSCCH/PSSCH resource for sending information by the first terminal. The SL resource of the second terminal may include a PSCCH/PSSCH resource for sending information to the first terminal by the second terminal.

In an optional implementation, the performing detection for a conflict resource includes:
performing detection for a conflict resource at a target time point; or
performing detection for a conflict resource at multiple time points including the target time point.

For the target time point, refer to the above description. Details are not repeated herein.

In this implementation, it can be implemented that the terminal performs detection for the conflict resource at least at the target time point, and whether to perform detection for the conflict resource at other time points may be determined by the first terminal, or specified by the protocol, or configured by the network. For example, the first terminal may always perform conflict detection, or the first terminal determines, according to terminal implementation, when to perform conflict detection, or the first terminal performs conflict detection at a time specified by the protocol/configured by the control node/pre-configured, and/or performs conflict detection at other times.

In an optional implementation, the conflict handling operation includes at least one of the following:
reselecting a resource;
discarding the conflict resource;
feeding back HARQ information; and
notifying a second terminal, where the second terminal is a peer end of the first terminal on a physical sidelink channel.

The reselecting a resource may be performing reselection in a resource pool to which the conflict resource belongs, or may be performing reselection in another resource pool. The discarding the conflict resource may be discarding the conflict resource and selecting another resource, or may be discarding the TB on the conflict resource. The feeding back HARQ information may be properly performing feedback based on an actual situation of the terminal. For example, for unicast, a NACK is fed back or no information is fed back; for groupcast option 1 (groupcast option 1), a NACK is fed back; and for groupcast option 2 (groupcast option 2), a NACK is fed back or no information is fed back.

The notifying a second terminal may be notifying the second terminal of the conflict resource. After receiving the notification, the second terminal may perform at least one of conflict handling operations of reselecting a resource, discarding the conflict resource, and feeding back HARQ information.

In this implementation, a resource conflict may be removed through the foregoing conflict handling operation, so as to improve transmission reliability and resource utilization.

In this embodiment of this application, the conflict handling operation may include performing reselection against a colliding PSCCH/PSSCH resource, or performing reselection against a PSCCH/PSSCH resource causing a PSFCH conflict. In addition, the reselection may be applicable only to a colliding PSCCH/PSSCH resource or only to a PSCCH/PSSCH resource causing a PSFCH conflict, or may be applicable to a periodic resource of the colliding PSCCH/PSSCH resource or the PSCCH/PSSCH resource causing the PSFCH conflict.

In addition, in the conflict handling operation, after the TB arrives, the second terminal is allowed to select, within a PDB, (any) other resources able to bear the TB transmission.

In addition, the conflict handling operation may include directly performing PSCCH/PSSCH retransmission (that is, HARQ feedback being ignored) by the second terminal.

The following uses six scenarios as examples to describe the conflict handling operation provided in this embodiment of this application:

### Scenario 1

As shown in FIG. 3, in this scenario, the first terminal is UE1, and UE0 and UE2 are the second terminals. The following may be specifically included:
After detecting a conflict resource, UE1 performs the following conflict handling operation:
UE1 informs a target peer end (UEO or UE2) to perform reselection against a colliding PSCCH/PSSCH resource, or informs the target peer UE (UE2) to drop the PSCCH/PSSCH transmission/use other non-conflict resources for transmission, so that the target peer end may perform a corresponding action.

In a case that there are multiple peer ends meeting a condition, UE1 may send trigger signaling to part of the peer ends.

For example, UE1 sends trigger signaling to the peer end that performs transmission of a specific transmission type (for example, unicast).

For example, UE1 sends trigger signaling to a peer end whose transmission QoS requirement is high/low (with a priority being higher than/not lower than/lower/not higher than a threshold).

For example, UE1 sends trigger signaling to one/more peer UEs to which reservation signaling for reserving the conflict resource is recently sent.

For example, UE1 sends trigger signaling to UEs with more conflicts. A current TB transmission of UE0 collides with a transmission of UE2, and a TB transmission of UE2 collides with transmissions of UE0, 3, 4, and 5. In this case, trigger signaling may be sent to UE2, so as to reduce the number of times of notifying reselection.

For example, UE1 sends trigger signaling to UE with a longer delay (PDB) corresponding to TB transmission, to ensure successful transmission with a shorter delay.

In addition, the number of partial peer ends may be further limited, for example, the maximum number/minimum number/a range of the number.

The foregoing trigger signaling may be for trigger the pee to perform a corresponding conflict handling operation.

Optionally, if determining that the peer end has performed resource reselection for the conflict resource (for example, reselection triggered by pre-emption), UE1 does not need to send this notification, where UE1 may determine in an explicit indication or implicit manner whether the peer end has performed resource reselection for the conflict resource.

### Scenario 2

As shown in FIG. 4, this scenario includes detection for a conflict between SL transmits, for example, including a conflict between PSFCH TX and PSFCH TX. The first terminal is UE1, and UE0 and UE2 are the second terminals. The following may be specifically included:
After detecting a conflict resource, UE1 performs the following handling operation:
UE1 informs a target peer UE (UE2) to reselect a PSCCH/PSSCH resource causing a PSFCH conflict, or informs the target peer UE (UE2) to drop the PSCCH/PSSCH transmission/use other non-conflict resources for transmission, so that the target peer UE may perform a corresponding action.

In a case that there are multiple peer ends satisfying the condition, it may be as follows:
UE1 sends trigger signaling to part of peer UEs. For example, trigger signaling is sent to a peer end that perform a transmission of a specific transmission type, and trigger signaling is sent to UE having high/low QoS transmission requirements (with a priority being higher than/not lower than/lower/not higher than a specific threshold).

The number of partial peer ends may be further limited, for example, the maximum number/minimum number/a range of the number.

### Scenario 3

As shown in FIG. 5, this scenario includes conflict detection in duplex mode of transmit/receive, for example, including a conflict between PSSCH TX and PSSCH RX and a conflict between PSFCH TX and PSFCH RX. After duplex conflict of SL transmit/receive is detected, at least one of the following handling operations is used:
1. The first terminal is UE1, and UE0 and UE2 act as the second terminals. If UE1 detects a conflict resource, UE1 performs at least one of handling operations:
   1-1. Perform reselection against a colliding PSCCH/PSSCH resource (or a PSCCH/PSSCH resource causing a PSFCH conflict), or drop the PSCCH/PSSCH transmission/use other non-conflict resources for transmission.
   1-2. Inform a target peer end (UE2) to perform reselection against a colliding PSCCH/PSSCH resource (or a PSCCH/PSSCH resource causing a PSFCH conflict), or informs the target peer UE (UE2) to drop the PSCCH/PSSCH transmission/use other non-conflict resources for transmission, so that the target peer end may perform a corresponding action.
   1-3. Drop transmission/reception of the colliding PSCCH/PSSCH resource (or the PSCCH/PSSCH resources causing the PSFCH conflict). For example, transmission/reception is dropped according to protocol specification/configuration by the control node /pre-configuration, or transmission/reception is dropped based on a priority (for example, low-priority information is discarded).

If UE1 drops the PSCCH/PSSCH transmission, UE1 may continue to perform the foregoing operation 1-1.

If UE1 drops the PSCCH/PSSCH reception, UE1 may continue to perform the foregoing operation 1-2.

If UE1 drops the PSCCH/PSSCH reception, HARQ feedback may be performed according to the following rules to resume retransmission of the peer end:
for unicast (unicast), a NACK is fed back or no information is fed back, for example, no information is fed back in a discontinuous transmission (Discontinuous Transmission, DTX) scenario;
for groupcast option 1 (groupcast option 1), a NACK is fed back; and
for groupcast option 2 (groupcast option 2), a NACK is fed back, or no information is fed back, for example, no information is fed back in a DTX scenario.

1-4. In the scenario shown on the right side of FIG. 5, for a PSFCH conflict, UE1 drops transmission/reception of the colliding PSFCH according to the rules. For example, 'transmission'/'reception' is dropped according to protocol specification/configuration by a control node /pre-configuration, or 'transmission'/'reception' is dropped based on a priority (for example, low-priority reception/transmission is dropped).

2. The first terminal is UE2, and UE1 acts as the second terminal. If UE1 detects a conflict resource, UE1 performs at least one of handling operations:
2-1. Perform reselection against a colliding PSCCH/PSSCH resource (or a PSCCH/PSSCH resource causing a PSFCH conflict), or drop the PSCCH/PSSCH transmission/use other non-conflict resources for transmission.
2-2. Inform a target peer end (UE1) to perform reselection against a colliding PSCCH/PSSCH resource (or a PSCCH/PSSCH resource causing a PSFCH conflict), or informs the target peer UE (UE1) to drop the PSCCH/PSSCH transmission/use other non-conflict resources for transmission, so that the target peer UE may perform a corresponding action.

### Scenario 4

In this scenario, the first terminal is UE1, and UE0 and UE2 act as the second terminals. As shown in FIG. 6, this scenario includes detection for a duplex conflict between UL transmit/receive and SL transmit/receive or a conflict between UL transmit and SL transmit, for example, including a conflict between UL TX and PSSCH RX, and a conflict between UL TX and PSFCH TX.

After UE1 detects the duplex conflict between UL transmit/receive and SL transmit/receive or the conflict between UL transmit and SL transmit, the UE performs at least one of the following handling operations:
1-1. Inform a target peer end (UE2) to perform reselection against a colliding PSCCH/PSSCH resource (or a PSCCH/PSSCH resource causing a PSFCH conflict), or inform the target peer UE (UE2) to drop the PSCCH/PSSCH transmission/use other non-conflict resources for transmission, so that the target peer UE may perform a corresponding action.
1-2. UE1 drops the colliding UL transmission or PSCCH/PSSCH reception, or the colliding UL transmission or PSCCH/PSSCH reception causing a PSFCH conflict. For example, transmission/reception is dropped according to protocol specification/configuration by a control node /pre-configuration, or transmission/reception is dropped based on a priority (for example, low-priority information is discarded).

If UE1 drops UL TX transmission, UE1 may continue to perform the foregoing operation 1-1 in this scenario.

If UE1 drops the PSCCH/PSSCH reception, UE1 may continue to perform the foregoing operation 1-2 in this scenario.

If UE1 drops the PSCCH/PSSCH reception, HARQ feedback is performed according to the following rules to resume retransmission of the peer end:
for unicast (unicast), a NACK is fed back or no information is fed back, for example, no information is fed back in a DTX scenario;
for groupcast option 1 (groupcast option 1), a NACK is fed back; and
for groupcast option 2 (groupcast option 2), a NACK is fed back, or no information is fed back, for example, no information is fed back in a DTX scenario.

1-3. In the scenario shown on the right side of FIG. 6, for a PSFCH conflict, UE1 drops transmission on the PSFCH resource or UL TX transmission according to the rules. For example, PSFCH transmission/UL TX is dropped according to protocol specification/configuration by the control node /pre-configuration, or PSFCH transmission/UL TX is dropped based on a priority.

### Scenario 5

In this scenario, the first terminal is UE1, and UE0 and UE2 act as the second terminals. As shown in FIG. 7, this scenario includes detection for a duplex conflict between UL transmit/receive and SL transmit/receive or a conflict between UL transmit and SL transmit, for example, including a conflict between UL TX and PSSCH TX, and a conflict between UL TX and PSFCH RX.

After UE1 detects the duplex conflict between UL transmit/receive and SL transmit/receive or the conflict between UL transmit and SL transmit, the UE performs at least one of the following handling operations:
1-1. In the scenario shown on the left side of FIG. 7, perform reselection against a colliding PSCCH/PSSCH resource (or a PSCCH/PSSCH resource causing a PSFCH conflict), or drop the PSCCH/PSSCH transmission/use other non-conflict resources for transmission.
1-2. In the scenario shown on the right side of FIG. 7, for a PSFCH conflict, drop UL TX or PSFCH reception according to the rules, for example, dropping PSFCH transmission/reception according to protocol specification/configuration by the control node /pre-configuration, or dropping transmission/reception based on a priority.

If UE1 drops UL TX, UE1 may continue to perform the foregoing operation 1-1 in this scenario.

If UE1 drops PSFCH reception, UE1 may continue to perform the foregoing operation 1-1 in this scenario.

### Scenario 6

In this scenario, the first terminal is UE1, and UE0 and UE2 act as the second terminals. The transmission conflict includes:
UE1 detects PSCCH/PSSCH resource overlapping/potential resource overlapping between multiple transmit ends (UE2, UE0) (for example, time-frequency resources of these PSCCH/PSSCH resources partially or completely overlap), and at least one transmit end sends information to another transmit end in the multiple transmit ends. In this case, it is determined that there is a resource conflict.

For the scenarios of transmission conflict, any conflict handling operation in the scenario 1 to scenario 5 may be performed.

It should be noted that in the foregoing six scenarios, UL TX may be replaced by LTE SL TX/RX or transmission of any other technologies (such as Wi-Fi, Bluetooth, or Zigbee). In addition, the foregoing six scenarios are only examples of the conflict handling operations provided in the embodiments of this application, and the conflict handling operations in the embodiments of this application are not limited to the conflict handling operations in the foregoing six scenarios.

In an optional implementation, the performing SL resource selection based on the resource of the second terminal includes at least one of the following:
excluding the resource of the second terminal during SL resource selection; and
excluding, during SL resource selection, a resource associated with a PSFCH corresponding to the resource of the second terminal.

The performing SL resource selection based on the resource of the second terminal may be performing resource selection before or after the conflict resource is detected.

The excluding the resource of the second terminal during SL resource selection may be that the first terminal excludes a (time domain and/or frequency domain) resource in which the PSCCH/PSSCH resource of the second terminal is located, so as to perform SL resource selection.

The excluding, during SL resource selection, a resource associated with a PSFCH corresponding to the resource of the second terminal may be excluding an associated PSCCH/PSSCH occasion (PSCCH/PSSCH occasion(s)) of a PSFCH occasion (PSFCH occasion) corresponding to the PSCCH/PSSCH resource of the second terminal.

In addition, the foregoing exclusion and selection may be performed during the process of obtaining a candidate resource set, or may be performed during the process of selecting a transmission resource from the candidate resource set.

In this implementation, because the resource of the second terminal is excluded and the resource associated with the PSFCH corresponding to the resource of the second terminal is excluded, conflict of a selected SL resource can be avoided, so as to improve SL transmission reliability.

In this embodiment of this application, the excluding the resource of the second terminal or excluding the resource associated with the PSFCH corresponding to the resource of the second terminal may include:
excluding the resource of the second terminal or excluding the resource associated with the PSFCH corresponding to the resource of the second terminal during the process of obtaining the candidate resource set; or
excluding the resource of the second terminal or excluding the resource associated with the PSFCH corresponding to the resource of the second terminal during the process of selecting a transmission resource from the candidate resource set; or
performing resource reselection repeatedly during the process of selecting a transmission resource from the candidate resource set, until the resource of the second terminal is excluded or the resource associated with the PSFCH corresponding to the resource of the second terminal is excluded; or
repeatedly performing the step of resource reselection until the resource of the second terminal is excluded or the resource associated with the PSFCH corresponding to the resource of the second terminal is excluded.

The resource of the second terminal may be a PSCCH/PSSCH time-domain resource, PSCCH/PSSCH frequency-domain resource, or PSCCH/PSSCH time-frequency resource occupied by the second terminal.

The resource associated with the PSFCH corresponding to the resource of the second terminal may be a PSCCH/PSSCH resource corresponding to a PSFCH occasion that corresponds to the PSCCH/PSSCH resource of the second terminal.

In this embodiment of this application, the first terminal performs the target operation, where the target operation includes at least one of the following: performing detection for a conflict resource; performing a conflict handling operation for the conflict resource; and performing SL resource selection based on the resource of the second terminal, the second terminal being a peer end of the first terminal on the physical sidelink channel; where the conflict resource includes at least one of the following: a conflict between SL resources; and a conflict between an SL resource and a non-SL resource. In this way, the terminal performs the target operation, and therefore the SL handling capability of the terminal can be improved.

Referring to FIG. 8, FIG. 8 is a structural diagram of a resource processing apparatus according to an embodiment of the present invention. As shown in FIG. 8, the resource processing apparatus 800 includes:
an execution module 801, configured to perform a target operation, where the target operation includes at least one of the following:
performing detection for a conflict resource;
performing a conflict handling operation for the conflict resource; and
performing sidelink SL resource selection based on a resource of a second terminal, the second terminal being a peer end of the first terminal on a physical sidelink channel, and the first terminal including the resource processing apparatus.

The conflict resource includes at least one of the following:
a conflict between sidelink SL resources; and
a conflict between an SL resource and a non-SL resource.

Optionally, the resource processing apparatus 800 may further include at least one of the following:
a transmitting module, configured to send SL information; and
a receiving module, configured to receive SL information.

Optionally, the performing detection for a conflict resource includes:
performing detection for the conflict resource based on resource information.

The resource information is used to represent at least one of the following:
a resource of the first terminal and a resource of at least one second terminal.

Optionally, the performing detection for the conflict resource based on resource information include:
performing detection for the conflict resource based on the resource information and an identifier of the at least one second terminal.

Optionally, the resource of the at least one second terminal includes:
a resource that is of the at least one second terminal and that is determined based on SL control information received by the first terminal, where the SL control information includes at least one of the following:
resource reservation information and a terminal identifier associated with a reserved resource.

Optionally, the performing a conflict handling operation for the conflict resource includes:
in a case that the conflict resource is detected and there is a transmission conflict, performing the conflict handling operation for the conflict resource.

Optionally, presence of the transmission conflict is determined in a case of at least one of the following:
the first terminal needs to receive a transport block TB on the conflict resource;
the first terminal needs to send a TB on the conflict resource;
the first terminal needs to receive a hybrid automatic repeat request HARQ feedback on the conflict resource; and
the first terminal needs to send a HARQ feedback on the conflict resource; where
the TB is a TB corresponding to the conflict resource, and the HARQ feedback is a HARQ feedback corresponding to the conflict resource. The destination for receiving or sending the TB or HARQ feedback may be a peer UE.

Optionally, absence of the transmission conflict is determined in a case of at least one of the following:
the first terminal has successfully demodulated the TB before the conflict resource;
the first terminal is able to successfully send the TB before the conflict resource;
the first terminal does not need to receive a HARQ feedback on the conflict resource; and
the first terminal does not need to send a HARQ feedback on the conflict resource; where
the TB is a TB corresponding to the conflict resource, and the HARQ feedback is a HARQ feedback corresponding to the conflict resource. The destination for receiving or sending the TB or HARQ feedback may be a peer UE.

Optionally, the target operation further includes:
detecting whether a last transmission of a TB corresponding to the conflict resource before the conflict resource is successful.

Optionally, the performing a conflict handling operation for the conflict resource includes:
performing a conflict handling operation for the conflict resource in a case that at least one of the following is satisfied:
a transmission type corresponding to the conflict resource is a target transmission type;
quality of service QoS of transmission information corresponding to the conflict resource is target QoS;
no transmission resource for a TB corresponding to the conflict resource is present after the conflict resource; and
the first terminal is unable to send a plurality of physical sidelink feedback channels PSFCHs on the conflict resource, or a transmit power of at least one PSFCH of the first terminal on the conflict resource is lower than or equal to a threshold.

Optionally, the performing a conflict handling operation for the conflict resource includes:
in a case that the conflict resource is being indicated as an SL resource of the first terminal for the first time, performing the conflict handling operation for the conflict resource under a first condition; or
in a case that the conflict resource is not being indicated as an SL resource of the first terminal for the first time, performing the conflict handling operation for the conflict resource under a second condition.

The first condition includes at least one of the following:
a transmission type corresponding to the conflict resource is a target transmission type;
QoS of transmission information corresponding to the conflict resource is target QoS;
no transmission resource for a TB corresponding to the conflict resource is present after the conflict resource; and
the first terminal is unable to send a plurality of PSFCHs on the conflict resource, or a transmit power of at least one PSFCH of the first terminal on the conflict resource is lower than or equal to a threshold.

The second condition includes at least one of the following:
a transmission type corresponding to the conflict resource is a target transmission type;
QoS of transmission information corresponding to the conflict resource is target QoS;
no transmission resource for a TB corresponding to the conflict resource is present after the conflict resource; and
the first terminal is unable to send a plurality of PSFCHs on the conflict resource, or a transmit power of at least one PSFCH of the first terminal on the conflict resource is lower than or equal to a threshold.

Content contained in the first condition is different from that in the second condition.

Optionally, the conflict handling operation includes at least one of the following:
reselecting a resource;
discarding the conflict resource;
feeding back HARQ information; and
notifying a second terminal, where the second terminal is a peer end of the first terminal on a physical sidelink channel.

Optionally, the performing a conflict handling operation for the conflict resource includes:
performing the conflict handling operation for the conflict resource based on a detection result at a target time point, where the detection result at the target time point is used to indicate at least one of the following:
the conflict resource;
whether there is a transmission conflict;
a transmission type of the conflict resource;
a priority of transmission information of the conflict resource;
after the conflict resource, whether there is a transmission resource for a TB corresponding to the conflict resource; and
whether the first terminal is able to send a plurality of PSFCHs on the conflict resource, or whether a transmit power of at least one PSFCH of the first terminal on the conflict resource is lower than or equal to a threshold.

Optionally, the performing detection for a conflict resource includes:
performing detection for a conflict resource at a target time point; or
performing detection for a conflict resource at multiple time points including the target time point.

Optionally, the target time point includes at least one of the following:
a time point T1 before resource indication being performed on an SL resource of the first terminal;
a time point prior to the time point T1 before resource indication being performed on the SL resource of the first terminal;
a time point T1 before reservation of the SL resource of the first terminal;
a time point prior to the time point T1 before reservation of the SL resource of the first terminal;
a time point T2 before the SL resource of the first terminal;
a time point prior to the time point T2 before the SL resource of the first terminal;
a time point T3 before an SL resource of the second terminal;
a time point prior to the time point T3 before the SL resource of the second terminal;
a time point T3 after sending of reservation indication signaling for the SL resource of the second terminal;
a time point being after sending of the reservation indication signaling for the SL resource of the second terminal and being within the time point T3 after sending of the reservation indication signaling for the SL resource of the second terminal;
a time point T4 before sending of conflict indication signaling associated with the SL resource of the second terminal; and
a time point prior to the time point T4 before sending of the conflict indication signaling associated with the SL resource of the second terminal; where
the SL resource of the second terminal is a resource used by the second terminal for SL transmission to the first terminal, and the T1, T2, T3 and T4 represent same or different time resources.

Optionally, the performing resource indication on the SL resource of the first terminal includes:
performing the i-th resource indication on the SL resource of the first terminal, where i is an integer greater than or equal to 1.

Optionally, the performing SL resource selection based on the resource of the second terminal includes at least one of the following:
excluding the resource of the second terminal during SL resource selection; and
excluding, during SL resource selection, a resource associated with a PSFCH corresponding to the resource of the second terminal.

The resource processing apparatus provided in this embodiment of this application can implement the processes of the method embodiment of FIG. 2. To avoid repetition, details are not repeated herein. The SL processing capability of the terminal can be improved.

It should be noted that the resource processing apparatus in this embodiment of this application may be an apparatus, or may be a component, an integrated circuit, or a chip in a terminal.

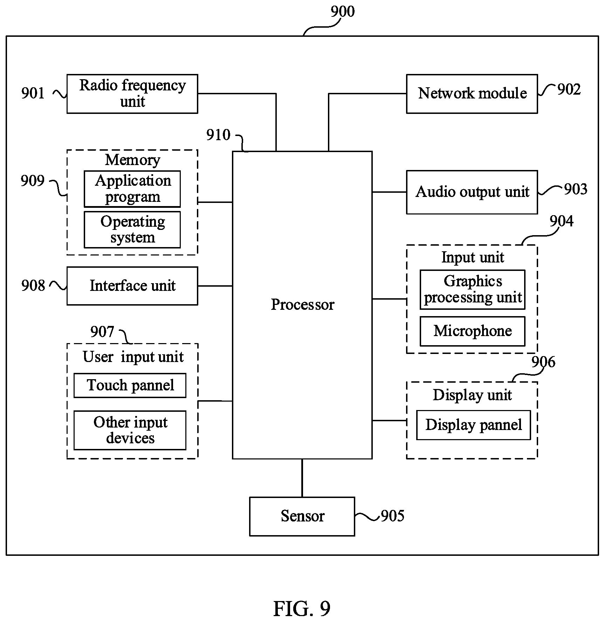

FIG. 9 is a schematic diagram of a hardware structure of a communication device for implementing the embodiments of this application.

The communication device 900 includes but is not limited to components such as a radio frequency unit 901, a network module 902, an audio output unit 903, an input unit 904, a sensor 905, a display unit 906, a user input unit 907, an interface unit 908, a memory 909, and a processor 910.

A person skilled in the art can understand that the communication device 900 may further include a power supply (for example, a battery) supplying power to the components, and the power supply may be logically connected to the processor 910 through a power management system. In this way, functions such as charge management, discharge management, and power consumption management are implemented by using the power management system. The structure of the communication device shown in FIG. 9 does not constitute any limitation on the communication device. The communication device may include more or fewer components than shown in the figure, or a combination of some components, or the components disposed differently. Details are not repeated herein.

The processor 910 is configured to perform a target operation, where the target operation includes at least one of the following:
performing detection for a conflict resource;
performing a conflict handling operation for the conflict resource; and
performing sidelink SL resource selection based on a resource of a second terminal, the second terminal being a peer end of the first terminal on a physical sidelink channel, and the first terminal including the resource processing apparatus.

The conflict resource includes at least one of the following:
a conflict between sidelink SL resources; and
a conflict between an SL resource and a non-SL resource.

Optionally, the performing detection for a conflict resource includes:
performing detection for the conflict resource based on resource information.

The resource information is used to represent at least one of the following:
a resource of the first terminal and a resource of at least one second terminal.

Optionally, the performing detection for the conflict resource based on resource information include:
performing detection for the conflict resource based on the resource information and an identifier of the at least one second terminal.

Optionally, the resource of the at least one second terminal includes:
a resource that is of the at least one second terminal and that is determined based on SL control information received by the first terminal, where the SL control information includes at least one of the following:
resource reservation information and a terminal identifier associated with a reserved resource.

Optionally, the performing a conflict handling operation for the conflict resource includes:
in a case that the conflict resource is detected and there is a transmission conflict, performing the conflict handling operation for the conflict resource.

Optionally, presence of the transmission conflict is determined in a case of at least one of the following:
the first terminal needs to receive a transport block TB on the conflict resource;
the first terminal needs to send a TB on the conflict resource;
the first terminal needs to receive a hybrid automatic repeat request HARQ feedback on the conflict resource; and
the first terminal needs to send a HARQ feedback on the conflict resource; where
the TB is a TB corresponding to the conflict resource, and the HARQ feedback is a HARQ feedback corresponding to the conflict resource. The destination for receiving or sending the TB or HARQ feedback may be a peer UE.

Optionally, absence of the transmission conflict is determined in a case of at least one of the following:
the first terminal has successfully demodulated the TB before the conflict resource;
the first terminal is able to successfully send the TB before the conflict resource;
the first terminal does not need to receive a HARQ feedback on the conflict resource; and
the first terminal does not need to send a HARQ feedback on the conflict resource; where
the TB is a TB corresponding to the conflict resource, and the HARQ feedback is a HARQ feedback corresponding to the conflict resource. The destination for receiving or sending the TB or HARQ feedback may be a peer UE.

Optionally, the target operation further includes:
detecting whether a last transmission of a TB corresponding to the conflict resource before the conflict resource is successful.

Optionally, the performing a conflict handling operation for the conflict resource includes:
performing a conflict handling operation for the conflict resource in a case that at least one of the following is satisfied:
a transmission type corresponding to the conflict resource is a target transmission type;
quality of service QoS of transmission information corresponding to the conflict resource is target QoS;
no transmission resource for a TB corresponding to the conflict resource is present after the conflict resource; and
the first terminal is unable to send a plurality of physical sidelink feedback channels PSFCHs on the conflict resource, or a transmit power of at least one PSFCH of the first terminal on the conflict resource is lower than or equal to a threshold.

Optionally, the performing a conflict handling operation for the conflict resource includes:
in a case that the conflict resource is being indicated as an SL resource of the first terminal for the first time, performing the conflict handling operation for the conflict resource under a first condition; or
in a case that the conflict resource is not being indicated as an SL resource of the first terminal for the first time, performing the conflict handling operation for the conflict resource under a second condition; where
the first condition includes at least one of the following:
   a transmission type corresponding to the conflict resource is a target transmission type;
   QoS of transmission information corresponding to the conflict resource is target QoS;
   no transmission resource for a TB corresponding to the conflict resource is present after the conflict resource; and
   the first terminal is unable to send a plurality of PSFCHs on the conflict resource, or a transmit power of at least one PSFCH of the first terminal on the conflict resource is lower than or equal to a threshold.

The second condition includes at least one of the following:
a transmission type corresponding to the conflict resource is a target transmission type;
QoS of transmission information corresponding to the conflict resource is target QoS;
no transmission resource for a TB corresponding to the conflict resource is present after the conflict resource; and
the first terminal is unable to send a plurality of PSFCHs on the conflict resource, or a transmit power of at least one PSFCH of the first terminal on the conflict resource is lower than or equal to a threshold; where
content contained in the first condition is different from that in the second condition.

Optionally, the conflict handling operation includes at least one of the following:
reselecting a resource;
discarding the conflict resource;
feeding back HARQ information; and
notifying a second terminal, where the second terminal is a peer end of the first terminal on a physical sidelink channel.

Optionally, the performing a conflict handling operation for the conflict resource includes:
performing the conflict handling operation for the conflict resource based on a detection result at a target time point, where the detection result at the target time point is used to indicate at least one of the following:
the conflict resource;
whether there is a transmission conflict;
a transmission type of the conflict resource;
a priority of transmission information of the conflict resource;
after the conflict resource, whether there is a transmission resource for a TB corresponding to the conflict resource; and
whether the first terminal is able to send a plurality of PSFCHs on the conflict resource, or whether a transmit power of at least one PSFCH of the first terminal on the conflict resource is lower than or equal to a threshold.

Optionally, the performing detection for a conflict resource includes:
performing detection for a conflict resource at a target time point; or
performing detection for a conflict resource at multiple time points including the target time point.

Optionally, the target time point includes at least one of the following:
a time point T1 before resource indication being performed on an SL resource of the first terminal;
a time point prior to the time point T1 before resource indication being performed on the SL resource of the first terminal;
a time point T1 before reservation of the SL resource of the first terminal;
a time point prior to the time point T1 before reservation of the SL resource of the first terminal;
a time point T2 before the SL resource of the first terminal;
a time point prior to the time point T2 before the SL resource of the first terminal;
a time point T3 before an SL resource of the second terminal;
a time point prior to the time point T3 before the SL resource of the second terminal;
a time point T3 after sending of reservation indication signaling for the SL resource of the second terminal;
a time point being after sending of the reservation indication signaling for the SL resource of the second terminal and being within the time point T3 after sending of the reservation indication signaling for the SL resource of the second terminal;
a time point T4 before sending of conflict indication signaling associated with the SL resource of the second terminal; and
a time point prior to the time point T4 before sending of the conflict indication signaling associated with the SL resource of the second terminal; where
the SL resource of the second terminal is a resource used by the second terminal for SL transmission to the first terminal, and the T1, T2, T3 and T4 represent same or different time resources.

Optionally, the performing resource indication on the SL resource of the first terminal includes:
performing the i-th resource indication on the SL resource of the first terminal, where i is an integer greater than or equal to 1.

Optionally, the performing SL resource selection based on the resource of the second terminal includes at least one of the following:
excluding the resource of the second terminal during SL resource selection; and
excluding, during SL resource selection, a resource associated with a PSFCH corresponding to the resource of the second terminal.

In this embodiment of this application, the SL processing capability of the terminal can be improved.

Optionally, an embodiment of this application further provides a communications device. The communications device is a second communications device, including a processor 910, a memory 908, and a program or an instruction stored in the memory 908 and capable of running on the processor 910. When the program or the instruction is executed by the processor 910, the processes of the foregoing embodiment of the resource processing method are implemented, with the same technical effects achieved. To avoid repetition, details are not described herein again.

An embodiment of this application further provides a readable storage medium, where a program or instructions are stored in the readable storage medium, and when the program or the instructions are executed by a processor, the steps of the resource processing method provided in the embodiments of this application are implemented.

An embodiment of this application further provides a program product, where the program product is stored in a non-volatile storage medium, and the program product is executed by at least one processor to implement the steps of the resource processing method.

The processor is a processor in the terminal or the network device described in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip, where the chip includes a processor and a communications interface. The communications interface is coupled to the processor, and the processor is configured to run a program or an instruction of a network device to implement the processes of the foregoing embodiments of the resource processing method in the embodiments of this application, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application provides a computer program product, where the computer program product is stored in a non-transient storage medium, and when being executed by at least one processor, the computer program product is configured to implement the processes of the foregoing method embodiments, with the same technical effects achieved. To avoid repetition, details are not repeated herein.

An embodiment of this application provides a communications device, configured to perform the processes of the foregoing method embodiments, with the same technical effects achieved. To avoid repetition, details are not described herein.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary common hardware platform, and certainly may alternatively be implemented by using hardware. However, in most cases, the former is a preferred implementation. Based on such an understanding, the technical solutions of this application essentially or the part contributing to the prior art may be implemented in a form of a software product. The software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A resource processing method, comprising:
performing, by a first terminal, a target operation, wherein the target operation comprises at least one of the following:
performing detection for a conflict resource;
performing a conflict handling operation for the conflict resource; and
performing sidelink SL resource selection based on a resource of a second terminal, the second terminal being a peer end of the first terminal on a physical sidelink channel; wherein
the conflict resource comprises at least one of the following:
a conflict between SL resources; and
a conflict between an SL resource and a non-SL resource.

2. The method according to claim 1, wherein the performing detection for a conflict resource comprises:
performing, by the first terminal, detection for the conflict resource based on resource information; wherein
the resource information is used to represent at least one of the following:
a resource of the first terminal and a resource of at least one second terminal.

3. The method according to claim 2, wherein the performing, by the first terminal, detection for the conflict resource based on resource information comprises:
performing, by the first terminal, detection for the conflict resource based on the resource information and an identifier of the at least one second terminal.

4. The method according to claim 2 or 3, wherein the resource of the at least one second terminal comprises:
a resource that is of the at least one second terminal and that is determined based on SL control information received by the first terminal, wherein the SL control information comprises at least one of the following:
resource reservation information and a terminal identifier associated with a reserved resource.

5. The method according to claim 1, wherein the performing a conflict handling operation for the conflict resource comprises:
in a case that the conflict resource is detected and there is a transmission conflict, performing the conflict handling operation for the conflict resource.

6. The method according to claim 5, wherein presence of the transmission conflict is determined in a case of at least one of the following:
the first terminal needs to receive a transport block TB on the conflict resource;
the first terminal needs to send a TB on the conflict resource;
the first terminal needs to receive a hybrid automatic repeat request HARQ feedback on the conflict resource; and
the first terminal needs to send a HARQ feedback on the conflict resource; wherein
the TB is a TB corresponding to the conflict resource, and the HARQ feedback is a HARQ feedback corresponding to the conflict resource.

7. The method according to claim 5 or 6, wherein absence of the transmission conflict is determined in a case of at least one of the following:
the first terminal has successfully demodulated the TB before the conflict resource;
the first terminal is able to successfully send the TB before the conflict resource;
the first terminal does not need to receive a HARQ feedback on the conflict resource; and
the first terminal does not need to send a HARQ feedback on the conflict resource; wherein
the TB is a TB corresponding to the conflict resource, and the HARQ feedback is a HARQ feedback corresponding to the conflict resource.

8. The method according to claim 1, wherein the target operation further comprises:
detecting whether a last transmission of a TB corresponding to the conflict resource before the conflict resource is successful.

9. The method according to claim 1, wherein the performing a conflict handling operation for the conflict resource comprises:
performing a conflict handling operation for the conflict resource in a case that at least one of the following is satisfied:
a transmission type corresponding to the conflict resource is a target transmission type;
quality of service QoS of transmission information corresponding to the conflict resource is target QoS;
no transmission resource for a TB corresponding to the conflict resource is present after the conflict resource; and
the first terminal is unable to send a plurality of physical sidelink feedback channels PSFCHs on the conflict resource, or a transmit power of at least one PSFCH of the first terminal on the conflict resource is lower than or equal to a threshold.

10. The method according to claim 1, wherein the performing a conflict handling operation for the conflict resource comprises:
in a case that the conflict resource is being indicated as an SL resource of the first terminal for the first time, performing the conflict handling operation for the conflict resource under a first condition; or
in a case that the conflict resource is not being indicated as an SL resource of the first terminal for the first time, performing the conflict handling operation for the conflict resource under a second condition; wherein
the first condition comprises at least one of the following:
a transmission type corresponding to the conflict resource is a target transmission type;
QoS of transmission information corresponding to the conflict resource is target QoS;
no transmission resource for a TB corresponding to the conflict resource is present after the conflict resource; and
the first terminal is unable to send a plurality of PSFCHs on the conflict resource, or a transmit power of at least one PSFCH of the first terminal on the conflict resource is lower than or equal to a threshold; wherein
the second condition comprises at least one of the following:
a transmission type corresponding to the conflict resource is a target transmission type;
QoS of transmission information corresponding to the conflict resource is target QoS;
no transmission resource for a TB corresponding to the conflict resource is present after the conflict resource; and
the first terminal is unable to send a plurality of PSFCHs on the conflict resource, or a transmit power of at least one PSFCH of the first terminal on the conflict resource is lower than or equal to a threshold; wherein
content contained in the first condition is different from that in the second condition.

11. The method according to claim 1, wherein the conflict handling operation comprises at least one of the following:
reselecting a resource;
discarding the conflict resource;
feeding back HARQ information; and
notifying a second terminal, wherein the second terminal is a peer end of the first terminal on a physical sidelink channel.

12. The method according to claim 1, wherein the performing a conflict handling operation for the conflict resource comprises:
performing the conflict handling operation for the conflict resource based on a detection result at a target time point, wherein the detection result at the target time point is used to indicate at least one of the following:
the conflict resource;
whether there is a transmission conflict;
a transmission type of the conflict resource;
a priority of transmission information of the conflict resource;
after the conflict resource, whether there is a transmission resource for a TB corresponding to the conflict resource; and
whether the first terminal is able to send a plurality of PSFCHs on the conflict resource, or whether a transmit power of at least one PSFCH of the first terminal on the conflict resource is lower than or equal to a threshold.

13. The method according to claim 1, wherein the performing detection for a conflict resource comprises:
performing detection for a conflict resource at a target time point; or
performing detection for a conflict resource at multiple time points comprising the target time point.

14. The method according to claim 12 or 13, wherein the target time point comprises at least one of the following:
a time point T1 before resource indication being performed on an SL resource of the first terminal;
a time point prior to the time point T1 before resource indication being performed on the SL resource of the first terminal;
a time point T1 before reservation of the SL resource of the first terminal;
a time point prior to the time point T1 before reservation of the SL resource of the first terminal;
a time point T2 before the SL resource of the first terminal;
a time point prior to the time point T2 before the SL resource of the first terminal;
a time point T3 before an SL resource of the second terminal;
a time point prior to the time point T3 before the SL resource of the second terminal;
a time point T3 after sending of reservation indication signaling for the SL resource of the second terminal;
a time point being after sending of the reservation indication signaling for the SL resource of the second terminal and being within the time point T3 after sending of the reservation indication signaling for the SL resource of the second terminal;
a time point T4 before sending of conflict indication signaling associated with the SL resource of the second terminal; and
a time point prior to the time point T4 before sending of the conflict indication signaling associated with the SL resource of the second terminal; wherein
the SL resource of the second terminal is a resource used by the second terminal for SL transmission to the first terminal, and the T1, T2, T3 and T4 represent same or different time resources.

15. The method according to claim 14, wherein the performing resource indication on the SL resource of the first terminal comprises:
performing the i-th resource indication on the SL resource of the first terminal, wherein i is an integer greater than or equal to 1.

16. The method according to claim 1, wherein the performing SL resource selection based on a resource of a second terminal comprises at least one of the following:
excluding the resource of the second terminal during SL resource selection; and
excluding, during SL resource selection, a resource associated with a PSFCH corresponding to the resource of the second terminal.

17. A resource processing apparatus, comprising:
an execution module, configured to perform a target operation, wherein the target operation comprises at least one of the following:
performing detection for a conflict resource;
performing a conflict handling operation for the conflict resource; and
performing sidelink SL resource selection based on a resource of a second terminal, the second terminal being a peer end of the first terminal on a physical sidelink channel, and the first terminal comprising the resource processing apparatus; wherein
the conflict resource comprises at least one of the following:
a conflict between sidelink SL resources; and
a conflict between an SL resource and a non-SL resource.

18. The apparatus according to claim 17, wherein the performing detection for a conflict resource comprises:
performing, by the first terminal, detection for the conflict resource based on resource information; wherein
the resource information is used to represent at least one of the following:
a resource of the first terminal and a resource of at least one second terminal.

19. The apparatus according to claim 18, wherein the performing a conflict handling operation for the conflict resource comprises:
in a case that the conflict resource is detected and there is a transmission conflict, performing the conflict handling operation for the conflict resource.

20. A terminal, wherein the terminal is a first terminal, comprising a memory, a processor, and a program or an instruction stored in the memory and capable of running on the processor, wherein the program or the instruction is executed by the processor to implement the steps of the resource processing method according to any one of claims 1 to 16.

21. A readable storage medium, wherein the readable storage medium stores a program or instructions, and when the program or the instructions are executed by a processor, the steps of the resource processing method according to any one of claims 1 to 16 are implemented.

22. A chip, comprising a processor and a communications interface, wherein the communications interface is coupled to the processor, and the processor is configured to execute a program or instructions to implement the steps of the resource processing method according to any one of claims 1 to 16.

23. A computer program product, wherein the program product is stored in a non-transitory storage medium, and the program product is executed by at least one processor to implement the steps of the resource processing method according to any one of claims 1 to 16.

24. A communication device, configured to perform the steps of the resource processing method according to any one of claims 1 to 16.
